# EUROPEAN PATENT APPLICATION

(11) **EP 1 419 928 A2**
(43) Date of publication of application: **19.05.2004**
(21) Application number: 02027559.0
(22) Date of filing: 09.12.2002
(51) Int. Cl.: B60N 2/48

(54) **Folding type center headrest for vehicle**

(30) Priority: 13.11.2002 KR 2002070395
(71) Applicant: Kia Motors Corporation, Seocho-gu, Seoul (KR)
(72) Inventor: Sung, Young Bok, Kyunggi-do (KR)
(74) Representative: Viering, Jentschura & Partner

(57) **Abstract**

The present invention relates to a folding type center headrest for a vehicle, and more particularly, to a folding type center headrest which is employed in a vehicle of which interior is divided into a passenger room and a cargo room so as to support a head of a passenger sitting at the center of a rear seat to secure driver's rear view by folding the folding type headrest when it is not in use. The folding type center headrest of the present invention comprises a receiving space 200 formed by bending rearward an upper end of a partition panel 100 for dividing the interior of the vehicle into a passenger room and a cargo room, brackets 300 positioned below the receiving space 200 and fixed onto the partition panel 100, a headrest member 400 which includes a shock-absorbing member 410 and a supporting rod 420 penetrating through one side of the shock-absorbing member 410 so that both ends of the supporting rod protrude from the shock-absorbing member 420 at opposite lateral surfaces thereof, and link rods 500 of which both ends are hinged to the brackets 300 and the ends of the supporting rod 420 of the headrest member 400, respectively. Accordingly, use convenience of the passenger can be enhanced since the headrest allows support of the head of the passenger sitting at the center of the rear seat, and drivability of the driver can also be improved since the driver's rear view can be easily secured by folding the folding type headrest when it is not in use.

## Description

### BACKGROUND OF THE INVENTION

### 1. Field of the Invention

The present invention relates to a folding type center headrest for a vehicle, and more particularly, to a folding type center headrest which is employed in a vehicle of which interior is divided into a passenger room and a cargo room so as to support a head of a passenger sitting at the center of a rear seat to secure driver's rear view by folding the folding type headrest when it is not in use. That is, the present invention is directed to a folding type center-headrest capable of enhancing use convenience of the passenger since the headrest allows support of the head of the passenger sitting at the center of the rear seat and of improving drivability of the driver since the driver's rear view can be easily secured by folding the folding type headrest when it is not in use.

### 2. Description of the Prior Art

In general, various kinds of headrests have been employed in seats of vehicles. Since each of these headrests is manufactured to support a head of a passenger, it can enhance use convenience of the passenger and prevent the passenger from being injured at his/her head upon occurrence of a vehicle collision accident.

On the other hand, the headrest becomes a cause of deterioration of driver's rear view when the driver looks at the rear of a vehicle through a rear-view mirror of the vehicle. Therefore, various types of headrests have been developed.

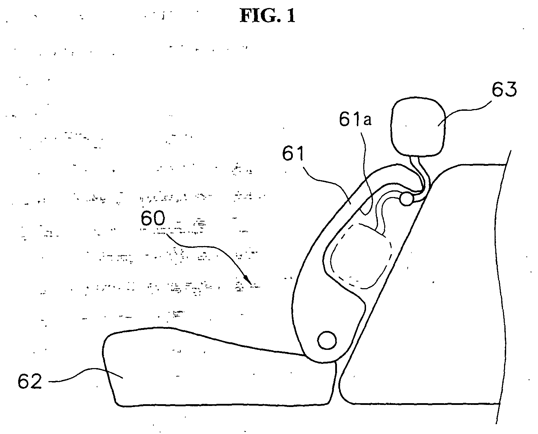

FIG. 1 is a side view showing a seat with a conventional folding type headrest for a vehicle. As shown in the figure, the seat 60 with the headrest comprises a seat cushion 62 fixed to a vehicle floor, a foldable backrest 61 which is hinged to a rear end of the seat cushion 62 and in which a receiving portion 61a is formed at a rear side thereof, and the headrest 63 which is hinged to an upper end of the backrest 61 so that it can be received within the receiving portion 61a through its own selective pivoting action.

As shown in FIG. 1, in a case where the passenger sits on the seat 60 constructed as such, the headrest 63 is pivoted upward and placed above the backrest 61 so that use convenience of the passenger can be enhanced. In a case where the passenger does not sit on the seat 60, the backrest 61 is pivoted and folded toward the seat cushion 62 to a certain angle in a counterclockwise direction, and the headrest 63 is then pivoted in a clockwise direction so that it can be received within the receiving portion 61a formed at the rear of the backrest 61, whereby the driver's rear view can be easily secured.

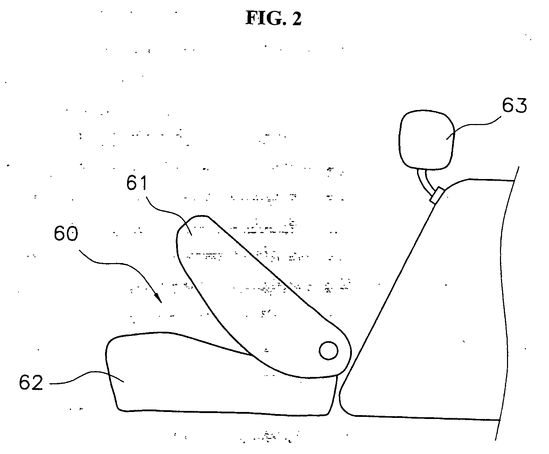

In addition, FIG. 2 is a side view showing another example of a seat with a conventional headrest for a vehicle. As shown in the figure, the seat with the headrest comprises a seat cushion 62 fixed to the vehicle floor, a foldable backrest 61 hinged to a lower end of the seat cushion 62, and a headrest 63 fixed to a vehicle body to be placed above an upper end of the backrest 61.

As shown in FIG. 2, in a case where the passenger sits on the seat 60 constructed as such, the backrest 61 is pivoted in a clockwise direction and then placed below the headrest 63 fixed to the vehicle body so that the use convenience of the passenger can be enhanced. In a case where the passenger does not sit on the seat 60 or cargos are to be loaded into the vehicle, the backrest 61 is folded in the counterclockwise direction and then the cargos can be loaded into the vehicle.

However, according to the seat with the folding type headrest shown in FIG. 1, there is inconvenience in that the backrest 61 should be always folded whenever the headrest 63 is caused to be pivoted either into the receiving portion 61a so as not to use the headrest 63 or out of the receiving portion 61a so as to use the headrest 63. The seat with the headrest shown in FIG. 2 has a problem in that the headrest 63 causes the driver's rear view to be deteriorated since the headrest is always fixed to the vehicle body.

Similarly, van type of vehicles generally have various interior arrangements according to their use, and are largely divided into passenger vans in which several rows of seats are fixed at the vehicle floor so as to transport the passengers only and cargo vans in which some rows of seats are removed so as to transport both the passengers and the cargos.

Moreover, the van is also widely used for transporting both the passengers and the cargos as mentioned above.

Such a cargo van includes a passenger room in which one or two rows of seats are provided and a cargo room that is separated from the passenger room by a partition panel for loading the-cargos therein.

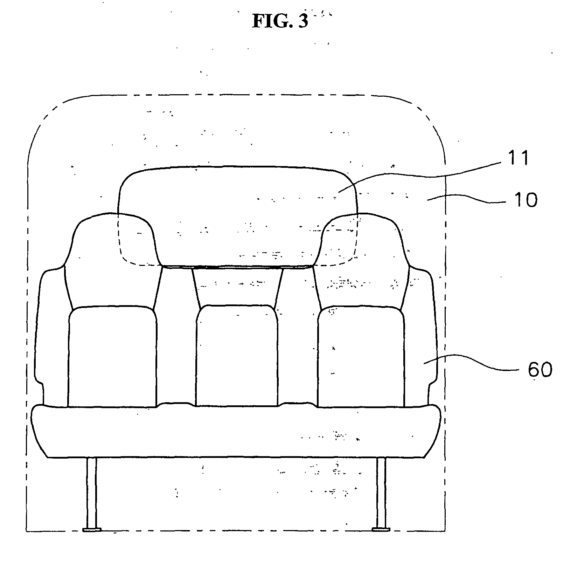

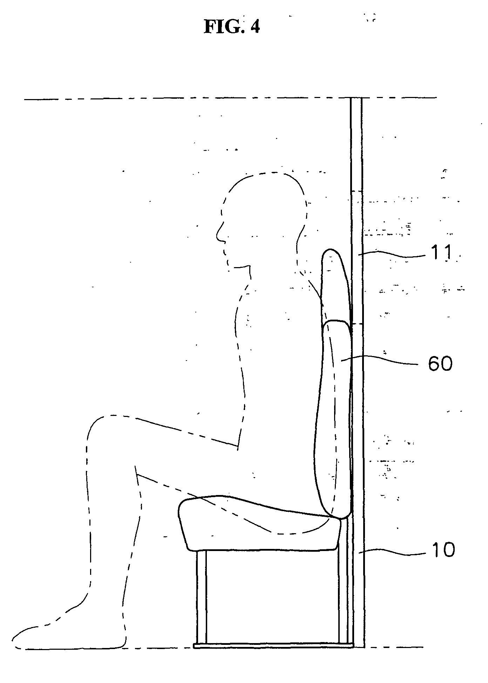

FIG. 3 is a front view showing the interior of the passenger room in the middle of a conventional vehicle, and FIG 4 is a side view showing the interior of the passenger room in the middle of the conventional vehicle.

As shown in the figures, the interior of the middle portion in the conventional vehicle includes the passenger and cargo rooms divided by the partition panel 10. Further, a rear seat for three passengers, i.e. the seat 60 fixed to the vehicle floor, is provided in front of the partition panel 10, and a window glass 11 is provided at a middle portion in the partition panel 10 so that the driver can easily look at the rear of the vehicle.

As shown in FIG. 3, the rear seat for the three passengers is provided in the interior of the middle portion in the conventional vehicle. However, no headrest is installed at a central portion of the rear seat, in order to secure the driver's rear view through the window glass provided in the partition panel. Thus, there are technical problems in that the passenger sitting at the center of the rear seat is very uncomfortable since there is no place on which the head of the passenger is supported, and that safety of the passenger sat at the center of the rear seat is lowered since his/her head is directly struck onto the window glass in the partition panel located behind the passenger upon occurrence of the vehicle collision accident.

### SUMMARY OF THE INVENTION

The present invention is contemplated to solve the above problems in the prior art. Accordingly, an object of the present invention is to provide a folding type center headrest for a vehicle, which is employed in the vehicle of which interior is divided into a passenger room and a cargo room so that use convenience of the passenger can be enhanced since the headrest allows support of a head of a passenger sitting at the center of a rear seat and drivability of a driver can also be improved since driver's rear view can be easily secured by folding the folding type headrest when it is not in use.

According to an aspect of the present invention for achieving the above object, there is provided a folding type center headrest for a vehicle, which comprises a receiving space which is formed by bending rearward an upper end of a partition panel for dividing the interior of the vehicle into a passenger room and a cargo room, brackets which are positioned below the receiving space and fixed onto the partition panel, a headrest member which includes a shock-absorbing member and a supporting rod penetrating through one side of the shock-absorbing member so that both ends of the supporting rod protrude from the shock-absorbing member at opposite lateral surfaces thereof, and link rods of which both ends are hinged to the brackets and ends of the supporting rod of the headrest member, respectively.

### BRIEF DESCRIPTION OF THE DRAWINGS

The above and other objects, advantages and features of the present invention will become apparent from the following description of a preferred embodiment given in conjunction with the accompanying drawings, in which:
FIG. 1 is a side view of a seat with a conventional folding type headrest for a vehicle;
FIG. 2 is a side view showing another example of a seat with a conventional folding type headrest for a vehicle;
FIG. 3 is a front view showing the interior of a passenger room in the middle of a conventional vehicle;
FIG. 4 is a side view showing the interior of the passenger room in the middle of the conventional vehicle;
FIG. 5 is a front view showing the interior of a middle portion in a vehicle with a folding type center headrest of the present invention installed therein;
FIG. 6 is a side view showing the interior of a middle portion in the vehicle with the folding type center headrest of the present invention installed therein;
FIG. 7 is a perspective view of the folding type center headrest according to the present invention;
FIG. 8 is a front view of the folding type center headrest according to the present invention; and
FIG. 9 is a side view of the folding type center headrest according to the present invention.

### DETAILED DESCRIPTION OF THE INVENTION

Hereinafter, a preferred embodiment of the present invention will be explained in detail with reference to the accompanying drawings.

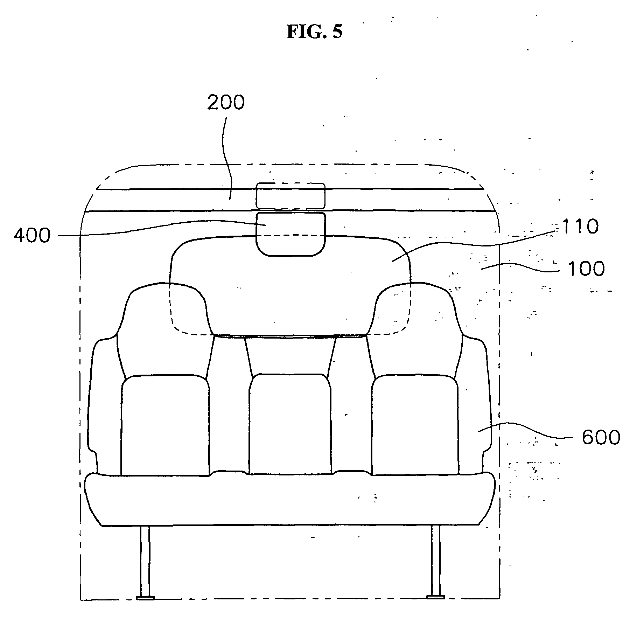

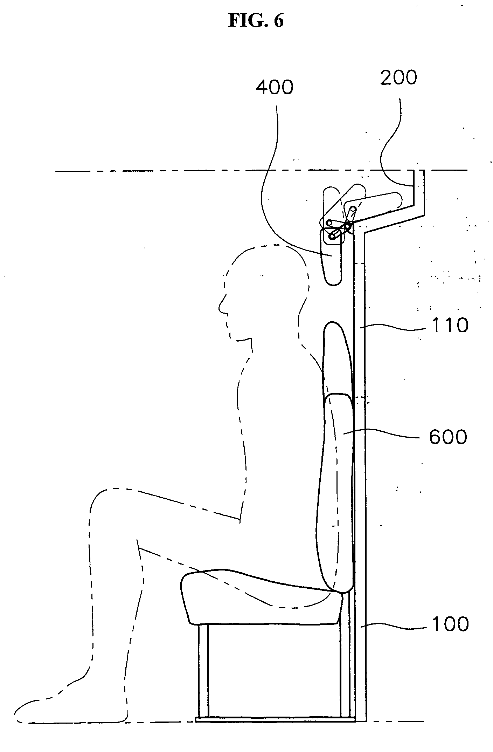

FIG. 5 is a front view showing the interior of a middle portion in a vehicle with a folding type center headrest of the present invention installed therein, and FIG. 6 is a side view showing the interior of the middle portion in the vehicle with the folding type center headrest installed therein.

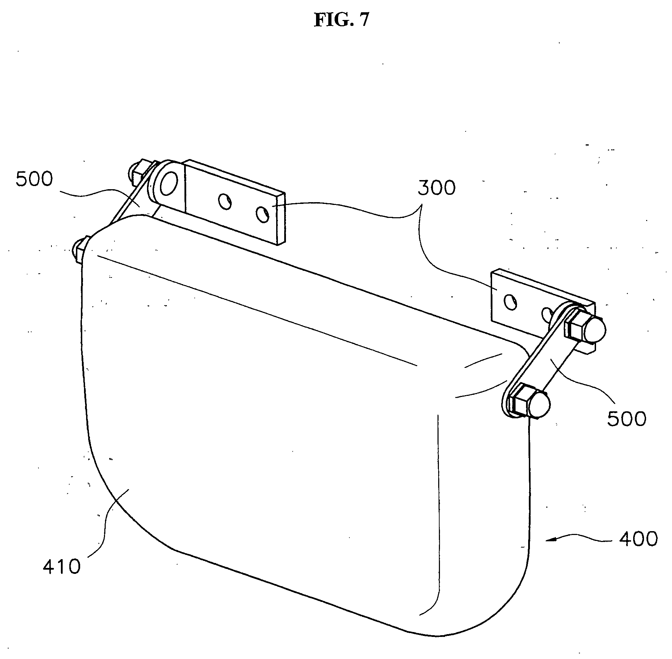

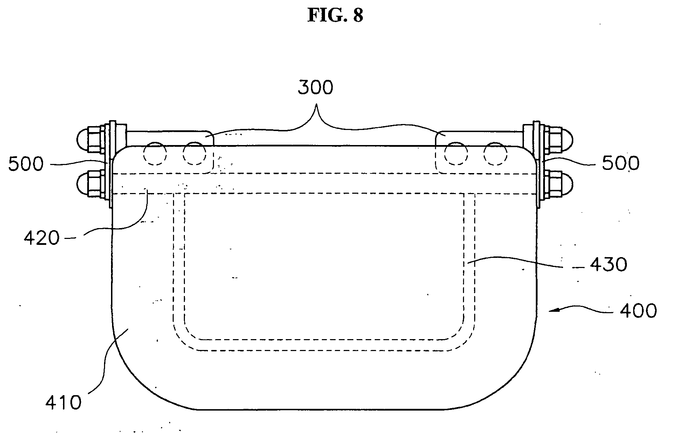

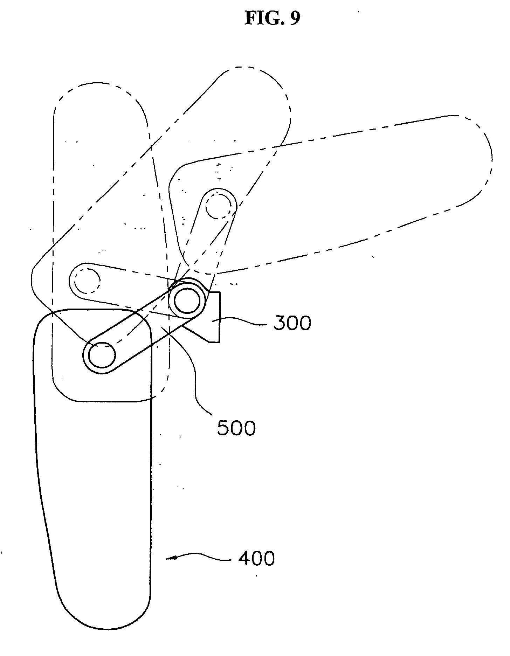

In addition, FIG. 7 is a perspective view of the folding type center headrest according to the present invention, FIG. 8 is a front view of the folding type center headrest according to the present invention, and FIG. 9 is a side view of the folding type center headrest according to the present invention.

As shown in the figures, the folding type center headrest of the present invention comprises a receiving space 200 formed by bending rearward an upper end of a partition panel 100 for dividing the interior of the vehicle into a passenger room and a cargo room, brackets 300 positioned below the receiving space 200 and fixed onto the partition panel 100, a headrest member 400 which includes a shock-absorbing member 410 and a supporting rod 420 penetrating through one side of the shock-absorbing member 410 so that both ends of the supporting rod protrude from the shock-absorbing member 420 at opposite lateral surfaces thereof, and link rods 500 of which both ends are hinged to the brackets 300 and the ends of the supporting rod 420 of the headrest member 400, respectively.

The headrest member 400 can be pivoted on the brackets 300 and then stored into the receiving space 200, when it is not in use.

In addition, a supporting frame 430 for supporting the shock-absorbing member 410 may be further provided to the supporting rod 420 of the headrest member 400.

Hereinafter, an operation of the present invention will be explained with reference to FIGS. 5 to 9.

As shown in FIGS. 5 and 6, the interior of the vehicle is separated into the passenger room and the cargo room by the partition panel 100. Further, a rear seat for three passengers, i.e. a seat 600 fixed to the vehicle floor, is provided in front of the partition panel 100, and a window glass 110 is provided at a middle portion of the partition panel 100 so that a driver can easily view the rear of the vehicle.

Furthermore, a portion of the upper end of the partition panel 100 is bent to define the receiving space 200, and the folding type center headrest of the present invention is provided above an upper central portion of the window glass 110 in the partition panel 100.

As shown in FIG 7, the folding type center headrest of the present invention constructed as such includes the headrest member 400 comprised of the shock-absorbing member 410 made of a shock-absorbing material. As shown in FIG. 8, the supporting rod 420 penetrates through an upper side of the headrest member 400 so that the ends of the supporting rod can protrude from the headrest member at the opposite lateral surfaces thereof. Thus, the shock-absorbing member 410 can be supported by the supporting rod 420.

In addition, one end of each of the link rods 500 is hinged to each end of the supporting rod 420 of the headrest member 400, while the other end thereof is hinged to each of the brackets 300 fixed to the central portion above the window glass 110 in the partition panel 100.

Therefore, the headrest member 400 can be foldably connected to the partition panel 100 through the link rods 500 and the brackets 300.

Furthermore, as shown in FIG. 8, the supporting frame 430 for supporting the shock-absorbing member 410 may also be provided to the supporting rod 420 of the headrest member 410 so that a supporting force for the headrest member 400 can be increased.

The operation of the folding type center headrest of the present invention constructed as such will be hereinafter explained according to whether the center headrest is in use or not.

First, if the passenger sits at the center of the seat 600 and intends to use the headrest of the present invention, the headrest member 400 should be pivoted on the brackets 300 in a counterclockwise direction so that the headrest member 400 can be placed at a position below the brackets 300, as shown in FIGS. 7 and 8. Thus, the headrest can be conveniently utilized. Further, a head of the passenger can be prevented from being struck directly onto the window glass 110 positioned at the rear of the head of the passenger upon occurrence of a vehicle collision accident. Accordingly, safety of the passenger can also be enhanced.

On the contrary, if the passenger does not sit at the cenfer of the seat 600 and use of the headrest is not necessary, the headrest member 400 should be pivoted on the brackets 300 in a clockwise direction so that it can be placed at a position above the brackets 300, as shown in dotted lines in FIG. 9. Then, the headrest member 400 is placed into the receiving space 200 provided at the partition panel 100, as shown in FIG. 6. Thus, the driver can easily secure the rear view of the vehicle.

Accordingly, the folding type center headrest for the vehicle of the present invention is constructed such that the headrest member 400 through the link rods 500 hinged to the brackets 300, which is fixed onto the partition panel 100, can be pivoted and folded. As a result, use convenience and safety of the passenger can be enhanced when the headrest is in use. Alternatively, when the headrest 400 is not in use, it can be placed into the receiving space 200 formed at the upper end of the partition panel 100. Thus, the driver's rear view can be easily secured and safe driving can also be attained.

As described above, according to the present invention, the folding type headrest is employed in the vehicle of which interior is divided into the passenger room and the cargo room, so that the use convenience of the passenger can be enhanced since the headrest allows the support of the head of the passenger sat at the center of the rear seat and drivability of the driver can also be improved since the driver's rear view can be easily secured by folding the folding type headrest when it is not in use.

It will be understood by those skilled in the art that various changes and modifications may be made to the present invention without departing from the spirit and scope of the present invention. It is apparent that the scope of the present invention should be construed based on the accompanying claims.

## Claims

1. A folding type center headrest for a vehicle, comprising:
a receiving space which is formed by bending rearward an upper end of a partition panel for dividing the interior of the vehicle into a passenger room and a cargo room;
brackets which are positioned below the receiving space and fixed onto the partition panel;
a headrest member which includes a shock-absorbing member and a supporting rod penetrating through one side of the shock-absorbing member so that both ends of the supporting rod protrude from the shock-absorbing member at opposite lateral surfaces thereof; and
link rods of which both ends are hinged to the brackets and the ends of the supporting rod of the headrest member, respectively.

2. The headrest as claimed in claim 1, wherein the headrest member is pivoted on the brackets and stored in the receiving space when it is not in use.

3. The headrest as claimed in claim 1, wherein a supporting frame for supporting the shock-absorbing member is further provided to the supporting rod of the headrest member.
